# EUROPEAN PATENT SPECIFICATION

(11) **EP 0 697 956 B1**
(45) Date of publication and mention of the grant of the patent: **23.06.1999**
(21) Application number: 95913082.4
(22) Date of filing: 10.03.1995
(51) Int. Cl.: B29D 31/00, B29C 44/14, B29C 44/18, B29C 44/32, B29C 45/14, B60J 10/00, B62D 25/04, B32B 31/00, F16J 15/14

(54) **COMPOSITE MATERIAL WITH FOAMABLE CORE**
VERBUNDWERKSTOFF MIT SCHAUMFÄHIGEM KERN
MATERIAU COMPOSITE A NOYAU EXPANSIBLE

(30) Priority: 14.03.1994 EP 94103895
(43) Date of publication of application: 28.02.1996
(73) Proprietor: MAGNA EXTERIOR SYSTEMS GmbH, 63179 Obertshausen (DE)
(72) Inventor: RIMKUS, Ralph, B-1180 Uccle (BE)
(74) Representative: Wolf, Eckhard, Dr.-Ing.
(86) International application number: EP9500896
(87) International publication number: WO9525005

(56) References cited:
- EP-A- 0 268 416
- EP-A- 0 383 498
- EP-A- 0 459 581
- WO-A-93/05103
- DE-A- 3 826 011
- DE-A- 4 039 135
- GB-A- 2 181 998
- US-A- 4 105 481
- US-A- 4 179 319
- PATENT ABSTRACTS OF JAPAN vol. 12 no. 442 (M-766) ,21 November 1988 & JP,A,63 173611 (NISSAN MOTOR CO LTD) 18 July 1988,
- PATENT ABSTRACTS OF JAPAN vol. 13 no. 183 (M-820) ,28 April 1989 & JP,A,01 012976 (NITTO ELECTRIC IND CO LTD) 17 January 1989,
- PATENT ABSTRACTS OF JAPAN vol. 7 no. 257 (M-256) ,16 November 1983 & JP,A,58 139878 (TOYOTA JIDOSHA KOGYO KK) 19 August 1983,
- PATENT ABSTRACTS OF JAPAN vol. 13 no. 432 (M-874) ,27 September 1989 & JP,A,01 164867 (TOYOTA MOTOR CORP) 28 June 1989,

## Description

The present invention relates to a composite material suitable for making seals, for example in cavities of a car structure.

For making seals in cavities of vehicles, it ist known from the EP-A- 0 383 498 to use heat foamable materials, i.e. materials which are converted at least partly into a foam by heating.

For example, heat foamable materials are shaped, to be introduced in the cavity and are then submitted to a heating, to allow the foaming.

Disadvantages of such a method are, for example,
- use of a major quantity of expansive heat foamable material;
- many geometries and positions are impossible because of flowing of the foamed material;
- assuming the amount of heat foamable material is unsufficient, no complete seal will be obtained;
- the structure will be submitted to unequal pressure due to the foaming.

The US-A-4,179,319 discloses a laminated sealing article comprising a layer of formed adhesive sandwiched between a pair of cross-linked, dimensionally heat unstable wafers of polymeric material. The article is provided with a plurality of apertures adapted to receive a corresponding plurality of substrates. The gaps between the plurality of substrates are sealed by heating the article to the recovery temperature of the wafers. This heating causes the layer of adhesive to bond to the substrates and the wafers to recover around the substrates thereby forming a seal between all of the substrates and the article. The heat recoverable article is particularly well adapted for use in a method of environmentally sealing the rear of an electrical connector of the type having a plurality of individually insulated electrical conductors extending from a tubular rear portion.

The present invention has for subject matter a composition material using a limited amount of heat foamable material while being suitable for making an excellent seal. The pressure exerted by the foamable material can be used interactively by the support for either directing the flow of the foam or/and shaping or transforming the support. Other advantages of the composite material according to the invention will be given furtherbelow.

In the specification hereafter, the wording "room" is used for defining a space defined by a wall or several walls such as a channel, a groove, etc.

The composite material according to the invention is defined in claim 1.

Advantageously, the room or groove formed in said support has at least one or several openings whereby at the foaming temperature, foam flows out of the room or groove in at least two different, preferably opposite directions. For example, when heat is applied, foam flows outside the room through two opposite openings, the flow of foam through a first opening being substantially in an opposite direction to the direction of the flow of foam through the second opening.

According to an embodiment, the support comprises an upper plate and a lower plate linked the one to the other by two walls forming channel(s) having a substantially equal cross-section between the parts of the walls agenced the one in front to the other. Such an embodiment ist suitable to force the foam flowing out of the room to flow preferably in a direction corresponding substantially to the axis of the channel.

Possibly, part(s) of the support is free of heat foam expandable material, whereby during the foaming, foam glides first on the support before extending or flowing outside the support, so that during the foaming, the foam no more in contact with the support has a sufficient rigidity so as to expand substantially only in the plane defined by the support.

For example, the support comprises an upper plate and a lower plate linked the one to the other by walls forming channel(s) extending between opposite end-openings, one end of said channels being provided with means to limit the passage of foam out of the channel(s) at said end(s). A preferred foaming direction is set, and the expansion force is controlled.

For facilitating the use of the composite material, the support is provided with means for securing it on a frame or structure.

The support is, for example, made of a composition containing polyamide, i.e of a material resisting at temperature of 200-255°C, temperature higher than the temperature required for the foaming.

According to a characteristic of an embodiment, the face of the upper plate directed towards the lower plate is parallel to the face of the lower plate directed towards the upper plate, said faces being separated the one from the other by a distance of at most 6 mm.

According to a further embodiment of a composite material according to the invention, the support comprises a first plate with a central hollow, a second plate with a central hollow and an element linking the said plates to form a channel extending between said central hollows.

According to a further characteristic of an embodiment, the composite material has bending point(s) or line(s) with a low bending resistance, allowing the transformation of shape and/or the support is made of a material which is deformable at the foaming temperature when the foaming pressure is higher than a determined pressure.

For example, the composite material is comprised of a support element comprising a first part linked by bending point(s) or line(s) to a second part, said first and second parts bearing each a plate, whereby the free end of the plate of the first part adjacent to the second part is distant from the free end of the plate of the second part adjacent to the first part, as well as from the second part.

A room is so defined between said first and second parts and their corresponding plates, said room having at least one opening located between the free ends of the plates.

Foaming material is placed in said room. The foaming pressure is used to bend the first part with respect to the second part, (the bending point(s) or line(s) acting as a hinge) allowing the composite to change shape. Preferably the movement of the hinge is being stopped by a stopper prolongation of the first or second part.

Heat foamable materials which can be used are for example compositions disclosed in EP 90301406.6 (PCT/EP 91/01520). Such compositions contain for example polymer or copolymer of ethylene and unsaturated acrylic ester.

The invention relates also to an foamed seal which is susceptible to be obtained by the heating of a composite material according to the invention, said seal being characterized in that it comprises a support defining a space or room and a foam extending in said space or room, as well as partly outside said room towards wall(s) of the structure on which a seal has to be formed.

The composite material used is advantageously a material in which a major part of the foamable material is close to the wall(s) of the structure on which a seal has to be formed. In the seal obtained by using such a composite material major part of foam material is close to wall(s) of the structure.

According to an embodiment of said seal the foam extending outside an opening of the space or room has substantially an equal density or the foam extending outside the room has substantially an equal density.

According to another embodiment, the seal has a central opening defined by the support which is provided with a surrounding room or space, foamable material expanding outside the room so as to form a surrounding seal.

The invention relates also to processes suitable for the manufacture of composite materials according to the invention.

According to a first process, the heat foamable material is injected in the room when the inner wall of said room has a minimum temperature of 50°C. The support is advantageously injected in a mold provided with a core, by example, an unmovable core so as to form a space in said support; the injected support being then removed from said mold and placed into a second mold, whereafter the heat foamable material is injected into the said formed room or space.

Other details and characteristics of the invention will appear from the following description which refers to the attached drawings.

In these drawings,
- Fig.1: is a perspective view of a first embodiment of a composite material according to the invention;
- Fig.2: is a perspective view of the first embodiment after foaming;
- Fig.3: is a perspective view of a second embodiment of a composite material according to the invention;
- Fig.4: is a perspective view with cross-section of a third embodiment of a composite material according to the invention;
- Fig.5A to 5C: are views of yet another embodiment of a composite material according to the invention;
- Fig.7 and 10: are views of another embodiment of a composite material according to the invention before and after foaming; while figures 8 and 9 are cross-sections of the embodiment shown in figure 7 along the lines X-X and XI-XI and
- Fig. 11 to 14: show steps of a process for the manufacture of a composite material according to the invention;

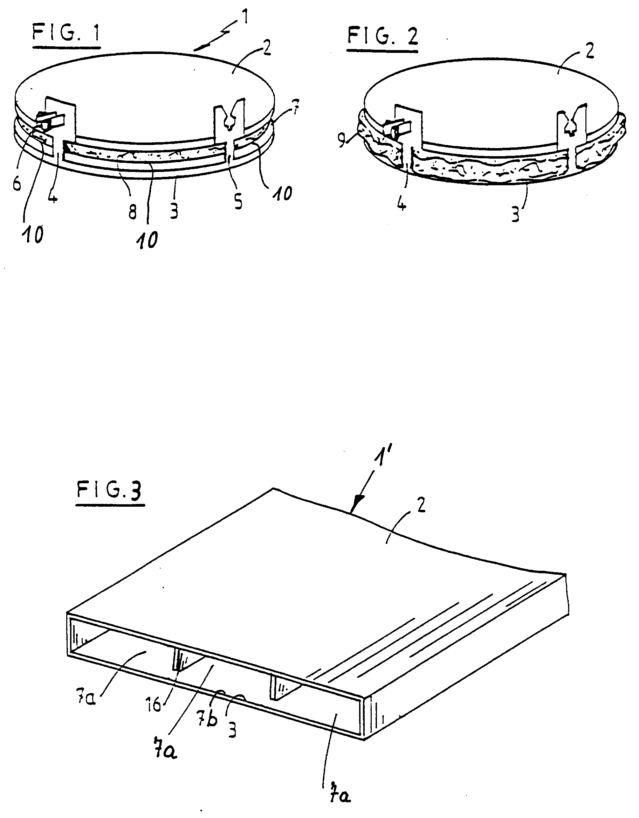

Fig.1 shows a composite material comprising a support 1 consisting of two parallel plates 2,3 which are linked together by means of walls 4,5, the latter being provided with means 6 for securing it onto a structure, for example into a cavity thereof.

A room 7 is defined between the upper plate 2 and the lower plate 3, room which is provided with a substantially continuous surrounding opening. In said room 7, a heat foamable material 8 is injected.

The plates are made in a material having a melting temperature higher than the temperature required for the foaming of material 8. For example, the plates are made of polyamide 6-6 resisting to temperature higher than 200° C, while the heat foamable material is a material as disclosed for example in EP 90301406.6, material which is environmentally friendly (no emission of isocyanate or CFC being produced during the processing).

When heating the composite material at a temperature of 140-200° C, the heat foamable material 8 starts to form a surrounding foam seal 9 which is intended to contact the wall of the cavity, to form a complete seal. Such a seal is adequate for reinforcing a structure, for adhering on the wall of the cavity, for having a sound deadening effect.

The plates 2,3 act as guiding means for the foam, i.e. the foam escaping the room 7 is directed towards a wall of the cavity and its expansion occurs substantially only between the planes in which the plates 2,3 extend. The foam exerts substantially a same pressure all around the wall of the cavity, while the density of the foam located outside the room 7 is substantially constant, as due to the plates, the foam escaping the space 7 is substantially unable to flow (sufficient rigidity) or is provided with an outer layer substantially unable to flow or sufficient rigid.

Fig.3 shows a further embodiment of a composite material according to the invention. In this embodiment, the support 1' consists of an upper plate 2, a lower plate 3 parallel to the upper plate 2 and linking plates or walls 16 defining a plurality of first rooms 7a separate the one from the other and connected at their ends respectively to a second common room 7b. Each space 7 defined between an upper plate, a lower plate and two linking plates has two opposite end openings and forms a guiding channel having a substantially constant cross-section.

A heat foamable material is placed within said first room 7a, so that during the foaming, foam flows outside the room in two opposite directions A,B and remains substantially in the space located between the planes of the upper plate, the lower plate and the linking plates.

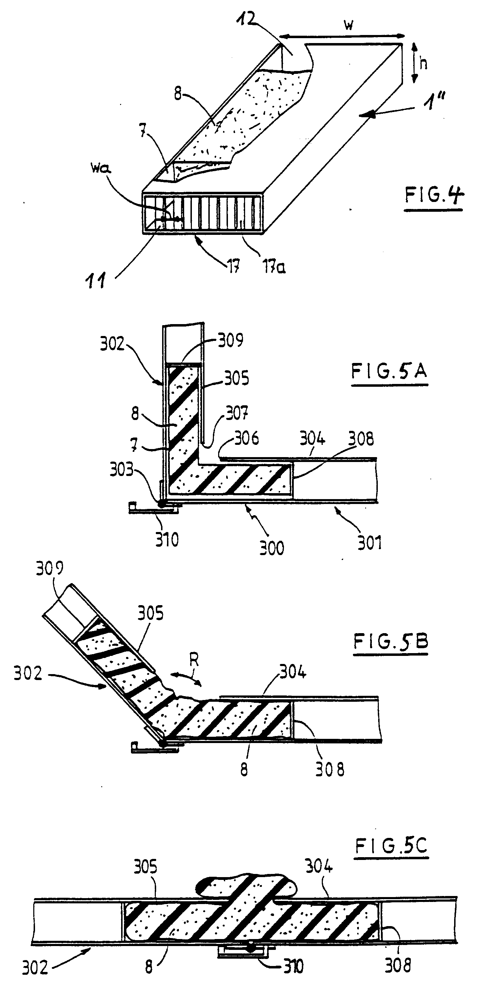

Fig.4 is a view of a composite material with two end openings 11, 12 similar to that shown in Figure 3, except that an end opening 11 of a space or room or channel 7 of the support 1'' is provided with a means 17 for limiting the flow of foam outside the room or channel through said end opening for acting against the flow of foam outside the room or channel through said end opening. Such a means is for example a comb or other similar piece defining a plurality of small openings 17a, preferably openings which are parallel the one to the other and which have a reduced width wa with respect to the width w or height h of the room or channel 7.

The heat foamable material 8 is located within the room 7 and does not fill completely the room 7 in his unfoamed form.

Fig.5A shows another embodiment of a composite material according to the invention. Said composite material is comprised of a support 300 comprising two parts 301, 302 linked together by a bending line 303. Each part bears, independently from the other, a plate 304, 305, the free end 306 of the plate 304 of the part 301 being distant from and not linked to the free end 307 of the plate 305 of the part 302.

A room 7 is so defined by said parts 301, 302 and their plates 304, 305.

The plates 304, 305 are attached to parts 301, 302 respectively by linking walls 308, 309.

The bending line 303 consists of a groove whereby the thickness of the support material is reduced.

Heat foamable material 8 is placed in the room 7 and acts as means ensuring that no bending occurs when the composite material is used at a temperature lower to the foaming temperature i.e. at a temperature at which the heat foamable material is rigid, for example when the composite material is placed into a cavity.

When the foaming temperature is reached, due to the pressure of the foam exerted on the support element linking walls 308,309 and on the plates 304,305, the part 302 rotates (R) around the bending line 303 with respect to the part 301 (See Fig.5B).

Due to a stopper prolongation 310 beared by the part 301, the part 302 is able to rotate up to contact said prolongation. Foam partly flows outside the room 7 through the opening defined between the free edges of the plates and acts therefore as means for connecting rigidly the parts 301,302 together and as means for ensuring that the part 302 is no more able to pivote with respect to the part 301 (See Fig.5C).

Fig.7 shows a further embodiment of a composite material according to the invention.

In said embodiment, the support 1''' consists of:
* a first plate 50 provided with a circular opening 51;
* a second plate 52 provided with a circular opening 53, and
* an element 54 linking the plates 50,52 and so as to form a channel extending between the openings 51 and 53. Said element 54 comprises two hollow funnel shaped pieces 55,56; the ends of which having the lower cross-section or diameter being linked together for example by means of a tube 57.

Between the plates 50,52 and the element 54, an annular space or groove 58 is formed, said space or groove having a surrounding opening 59 and being partly or entirely filled with a heat foamable material 60.

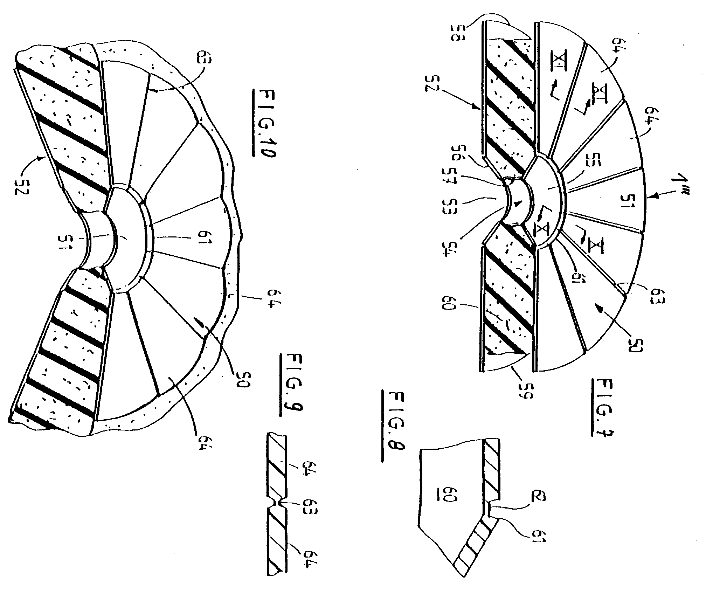

The upper and lower plates 50,52 are linked to the element 54 in such a way that parts of said plates are able to pivote along an edge 61 during the foaming. For example, the edge 61 is provided with a cutting 62 on its face opposite to its face directed towards the space 58 (see fig.8).

The upper and lower plates 50,52 are comprised of a plurality of arc-sections 64 linked together by a breaking line 63 (see fig.9). When the foam pressure against the plates 50,52 is high enough, the arc sections will fold at the weakening lines and take the shape of a funnel.

Figures 11 to 14 are schematic step views of a process for the manufacture of a composite material according to the invention.

A mold 70 is provided with two molding chambers 71, 72, and a central core 73 extending in the molding chamber 71. A cover 74 has two protrusions 75 intended to be introduced partly into the molding chambers 71, 72 so that at least during the injection of plastics or other materials into the molding chamber 71, a protrusion 75 contacts the central core 73.

The cover 74 is provided with channels 76, 77 respectively for injecting materials for making the support and heat foamable materials.

The various steps of the process will be explained herebelow:

### Step A :

The molding chambers 71 and 72 are void. After closing said chambers by means of the cover 74, plastic material is injected in a molding chamber 71 so as to form a support provided with a space or room or groove.

### Step B :

The cover 74 is removed so as to draw the injected support 1 out of the chamber 71 and the cover 74 is rotated (arrow R) so as to place the injected support in front of the molding chamber 72.

### Step C :

The cover 74 is closed to push the injected support in the molding chamber 72 and to close the two molding chambers (see fig.14).

### Step D :

In the molding chamber 71, plastic such as polyamide is injected, while in the molding chamber 72 heat foamable material is injected. The polyamide is injected at a temperature of about 270° C, while the heat foamable material is injected into the inner space or room of the previously injected support at a temperature of about 75-105° C. As the time necessary for taking an injected support out from the molding chamber 71 and for pushing it into the molding chamber 72 is very short, it is possible to ensure the injection of heat foamable material, while the support has still a temperature of about 100° C (i.e. higher than 50° C), whereby it is possible to obtain a better injection, i.e. an injected heat foamable material with a higher density or a higher expansion coefficient (See figure 11).

### Step E :

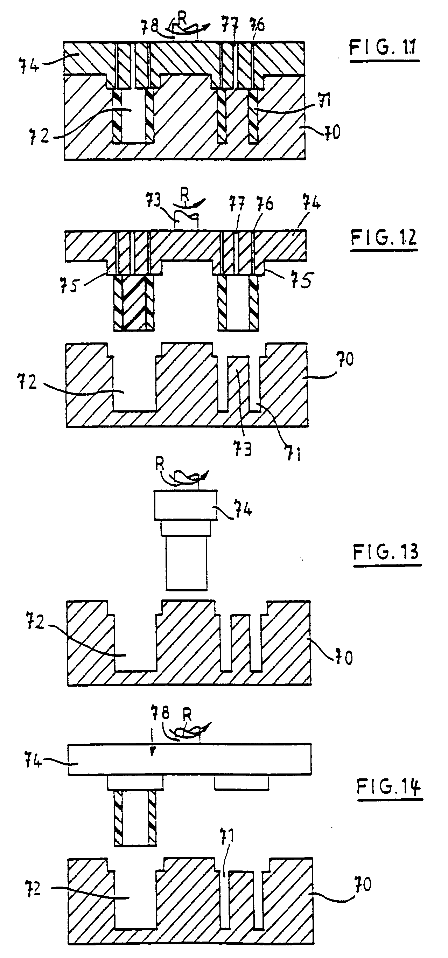

The cover 74 is removed. To said cover, a composite material and a support are attached. The cover 74 is rotated (arrow R) (see fig. 12).

### Step F :

After a rotation of 90° around its shaft 78, the formed composite material is ejected. (see figure 13).

### Step G :

The cover 74 is then rotated around its shaft so as to place the remaining injected support 1 in front of molding chamber 72.

The process can then be continued by repeating steps C to G.

The composite material manufactured by such a process may have a heat foamable material with a maximum thickness of about 5 mm or even lower, for example lower to 3 mm.

## Claims

1. Composite material comprising
- a support (1-1''';300), consisting of a first plate (2;50;304,305) and a second plate (3;52) linked together by walls (4,5;16;54;308,307),
- a room or groove (7,7a,7b;58) being defined between said two plates (2,3;50,52;304,305),
- a heat foamable material (8;60) agenced in said room or groove (7;7a,7b;58), and
- said support (1-1''';300) being made of a material with a melting temperature higher than the temperature requested for the foaming, so that when heat is applied to said heat foamable material (8;60), said material expands to foamed form out of the room or groove (7,7a,7b;58) through at least one opening (10;11,12;59) of the support or formed in the support due to the foaming pressure.

2. Composite material according to claim 1, characterised in that the walls (16) form at least one channel (11) having a substantially equal cross-section between the parts of the wall agenced the one in front of the other.

3. Composite material according to claim 1 or claim 2, characterized in that the both plates (2,3) of the support (1'') are linked by walls forming at least one channel extending between two opposite end-openings (11,12), one end-opening (11) of said channel being provided with a means (17) so as to limit the passage of foam out of the channel at said end-opening.

4. Composite material according to any of the claims 1 to 3, characterized in that the support (1-1''';300) is provided with a means (6) for attaching it on a frame or structure.

5. Composite material according to any of the claims 1 to 4, characterized in that the support (1-1''';300) is made in a composition containing polyamide.

6. Composite material according to any of the claims 1 to 5, characterized in that the face of the first plate (2;50) directed towards the second plate (3;52) of the support (1-1''';300) is parallel to the face of the second plate (3;52) directed towards the first plate (2;50), said faces being separated the one from the other from a distance of at most 6 mm.

7. Composite material according to claim 1, characterized in that the support (1''') comprises a first plate (50) with an opening (51), a second plate (52) with an opening (53) and an element (54) linking the said plates so as to form a channel extending between said openings.

8. Composite material according to any of the claims 1 to 7, characterized in that it has at least one bending or weakening point or line (61,63;303).

9. Composite material according to claim 1, characterised in that the support element (300) comprises two parts (301,302) linked together by at least one bending line (303), each part (301,302) bearing independently from the other a plate (304,305), the free end (306) of one plate (304) being distant from the free end (307) of the other plate (305), whereby a room (7) is defined by said parts and plates, heat foamable material (8) being placed in the room (7) whereby at the foaming temperature, a first part (302) pivotes around the bending line (303) with respect to the second part (301).

10. Composite material according to any of the preceding claims, characterised in that the heat foamable material (8;60) is selected among the group consisting of polymers and copolymers derived of ethylene and unsaturated acrylic ester.

11. Expanded seal susceptible to be obtained by the heating of a composite material according to any of the preceding claims, wherein said seal comprises a support (1 1''';300) with a first plate (2;50;304,305) and a second plate (3;52) linked together by walls (4,5;16;54;308,307), said two plates defining a room or groove (7,7a,7b;58) and a foam of heat foamable material extending in said room or groove as well as partly outside said room or groove and being expanded by applied heat for contacting a wall of the structure on which the seal has to be formed.

12. Seal according to claim 11, characterised in that the foam extending outside of the room or groove has substantially an equal density.

13. Seal according to claim 11, characterised in that the seal has a central opening (51,53) defined by the support (1''') which is provided with a surrounding room or groove (58), the foam stretching outside the room or groove to form a surrounding seal.

14. Process for the manufacture of a composite material according to any of the claims 1 to 11, in which in a first step plastic material is injected in a molding chamber (71) of a mold (70) so as to form a support provided with a room or groove (7,7a,7b;58), and in a further step a heat foamable material is injected in the room or groove of the support when the inner wall of said room or groove has a minimum temperature of 50°C.

15. Process according to claim 14, in which the plastic material is injected in a mold provided with a core, preferably an unmovable core, to form a room or groove in said support; the support being then removed from said mold and placed into a second mold, whereafter the heat foamable material is injected into the said room or groove.

16. Process according to claim 14, in which the plastic material is injected in a mold provided with a core, the core being then removed to form a room or groove in which heat foamable material is injected.

## Patentansprüche

1. Verbundwerkstoff mit
- einem Träger (1-1''';300) bestehend aus einer ersten Platte (2;50;304,305) und einer zweiten Platte (3; 52), wobei die Platten durch Wandungen (4,5;16;54;308,307) verbunden sind,
- einem zwischen den beiden Platten (2,3;50,52;304,305) begrenzten Raum oder Nut (7,7a,7b;58),
- einem in dem Raum oder der Nut (7;7a,7b;58) angeordneten warmschäumbaren Material (8;60), und
- der Trãger (1-1''';300) besteht aus einem Material mit einer höheren Schmelztemperatur als die für das Schäumen erforderliche Temperatur, so daß das warmschäumbare Material (8;60) sich bei Zufuhr von Wärme aus dem Raum oder der Nut (7,7a,7b;58) heraus über wenigstens eine Öffnung (10;11,12;59) des Trägers oder eine in dem Träger aufgrund des Schäumdrucks ausgebildete Õffnung in Schaumform ausdehnt.

2. Verbundwerkstoff nach Anspruch 1, **dadurch gekennzeichnet**, daß die Wandungen (16) wenigstens einen Kanal (11) bilden, welcher einen im wesentlichen gleichmäßigen Querschnitt zwischen den einander gegenüberliegenden Wandungsteilen aufweist.

3. Verbundwerkstoff nach Anspruch 1 oder Anspruch 2, **dadurch gekennzeichnet**, daß die beiden Platten (2,3) des Trägers (1'') durch Wandungen verbunden sind, welche wenigstens einen Kanal bilden, der sich zwischen zwei gegenüberliegenden Endõffnungen (11,12) erstreckt, wobei eine Endöffnung (11) des Kanals mit einem Mittel (17) zur Begrenzung des Schaumflusses aus dem Kanal heraus an der Endöffnung versehen ist.

4. Verbundwerkstoff nach einem der Ansprüche 1 bis 3, **dadurch gekennzeichnet**, daß der Träger (1-1''';300) mit einem Mittel (6) zu seiner Anbringung an einem Rahmen oder einer Struktur versehen ist.

5. Verbundwerkstoff nach einem der Ansprüche 1 bis 4, **dadurch gekennzeichnet**, daß der Träger (1-1''';300) in einer Polyamide enthaltenden Zusammensetzung hergestellt ist.

6. Verbundwerkstoff nach einem der Ansprüche 1 bis 5, **dadurch gekennzeichnet**, daß die der zweiten Platte (3;52) zugewandte Seitenfläche der ersten Platte (2;50) des Trägers (1-1''';300) parallel zu der der ersten Platte (2;50) zugewandten Seitenfläche der zweiten Platte (3;52) ist, wobei die Seitenflächen in Abstand von höchstens 6 mm voneinander getrennt sind.

7. Verbundwerkstoff nach Anspruch 1, **dadurch gekennzeichnet**, daß der Träger (1''') eine erste Platte (50) mit einer Öffnung (51), eine zweite Platte (52) mit einer Öffnung (53) und ein die Platten verbindendes Element (54) zur Bildung eines sich zwischen den genannten Öffnungen erstreckenden Kanals aufweist.

8. Verbundwerkstoff nach einem der Ansprüche 1 bis 7, **dadurch gekennzeichnet**, daß er wenigstens einen Biege- oder Schwächungs-Punkt oder -Linie (61,63;303) aufweist.

9. Verbundwerkstoff nach Anspruch 1, **dadurch gekennzeichnet**, daß das Trägerelement (300) zwei über wenigstens eine Biegelinie verbundene Teile (301,302) aufweist, wobei jedes Teil (301,302) unabhängig von dem anderen eine Platte (304,305) trägt, wobei das freie Ende (306) einer Platte (304) im Abstand von dem freien Ende (307) der anderen Platte (305) angeordnet ist, wobei ein Raum (7) durch die beiden Teile und Platten begrenzt ist und warmschäumbares Material (8) in den Raum (7) eingebracht ist, wodurch bei der Schäumtemperatur ein erster Teil (302) um die Biegelinie (303) gegenüber dem zweiten Teil (301) verschwenkt.

10. Verbundwerkstoff nach einem der vorhergehenden Ansprüche, **dadurch gekennzeichnet**, daß das warmschäumbare Material ausgewählt ist aus der Gruppe bestehend aus den aus Ethylen und ungesättigten Acrylestern erhältlichen Polymeren und Copolymeren.

11. Schaumdichtung erhältlich durch Erwärmen eines Verbundwerkstoffs nach einem der vorhergehenden Ansprüche, wobei die Dichtung einen Träger (1-1''';300) mit einer ersten Platte (2;50;304,305) und einer durch Wandungen (4,5;16;54;308,307) verbundenen zweiten Platte (3;52) aufweist, wobei die beiden Platten einen Raum oder eine Nut (7,7a,7b;58) begrenzen und wobei sich sowohl in dem Raum oder der Nut als auch außerhalb davon erstreckender Schaum aus warmschäumbarem Material durch Anwendung von Wärme aufgeschäumt wird, um eine Wandung der Struktur, auf welcher die Dichtung auszubilden ist, zu kontaktieren.

12. Dichtung nach Anspruch 11, **dadurch gekennzeichnet**, daß der sich außerhalb des Raums oder der Nut erstreckende Schaum eine im wesentlichen gleicbmäßige Dichte aufweist.

13. Dichtung nach Anspruch 11, **dadurch gekennzeichnet**, daß die Dichtung eine Zentralöffnung (51,53) aufweist, welche durch den Träger (1''') begrenzt ist, welcher mit einem umgebenden Raum oder einer Nut (58) versehen ist wobei der Schaum sich aus dem Raum oder der Nut heraus zur Bildung einer umgebenden Dichtung ausdehnt.

14. Verfahren zur Herstellung eines Verbundwerkstoffs nach einem der Ansprüche 1 bis 11, bei welchem in einem ersten Schritt Kunststoff-Formmasse in eine Formkammer (71) eines Formwerkzeugs (70) eingespritzt wird, um einen mit einem Raum oder einer Nut (7,7a,7b;58) versehenen Träger zu bilden und in einem weiteren Schritt ein warmschäumbares Material in den Raum oder die Nut des Trägers eingespritzt wird, wahrend die innere Wandung des Raumes oder der Nut eine Mindesttemperatur von 50 C aufweist.

15. Verfahren nach Anspruch 14, bei welchem die Kunststoff-Formmasse in ein mit einem vorzugsweise unbeweglichen Kern versehenes Formwerkzeug eingespritzt wird, um den Raum oder die Nut in dem Träger zu bilden; anschließend der Träger aus dem Formwerkzeug entfernt und in einem zweiten Formwerkzeug angeordnet wird, woraufhin das warmschäumbare Material in den Raum oder die Nut eingespritzt wird.

16. Verfahren nach Anspruch 14, bei welchem die Kunststoff-Formmasse in ein mit einem Kern versehenes Formwerkzeug eingespritzt wird und der Kern dann entfernt wird, um einen Raum oder eine Nut zu bilden, in welchen/welche warmschäumbares Material eingespritzt wird.

## Revendications

1. Matériau composite comprenant
- un support (1 à 1''' ; 300), constitué d'une première plaque (2 ; 50 ; 304, 305), et d'une seconde plaque (3 ; 52) reliées ensemble par des parois (4, 5 ; 16 ; 54 ; 308, 307),
- un volume ou rainure (7, 7a, 7b ; 58) qui est définie entre lesdites deux plaques (2, 3, ; 50, 52 ; 304, 305),
- un matériau thermomoussant (8 ; 60) disposé dans ledit volume ou rainure (7, 7a, 7b ; 58), et
- ledit support (1 à 1''' ; 300) étant fait d'un matériau présentant une température de fusion supérieure à la température nécessaire à la formation de mousse, de sorte que lorsque de la chaleur est appliquée audit matériau thermomoussant (8 ; 60), ledit matériau s'expanse en une forme transformée en mousse à l'extérieur du volume ou rainure (7, 7a, 7b ; 58) à travers au moins une ouverture (10 ; 11, 12 ; 59) du support ou formée dans le support en raison de la pression de formation de mousse.

2. Matériau composite selon la revendication 1, caractérisé en ce que les parois (16) forment au moins un canal (11) présentant une section transversale pratiquement égale entre les parties de la paroi disposées l'une en face de l'autre.

3. Matériau composite selon la revendication 1 ou la revendication 2, caractérisé en ce que les deux plaques (2, 3) du support (1'') sont reliées par des parois formant au moins un canal s'étendant entre deux ouvertures d'extrémité opposées (11, 12), une première ouverture d'extrémité (11) dudit canal étant munie d'un moyen (17) destiné à limiter le passage de la mousse à l'extérieur du canal au niveau de ladite ouverture d'extrémité.

4. Matériau composite selon l'une quelconque des revendications 1 à 3, caractérisé en ce que le support (1 à 1''' ; 300) est muni d'un moyen (6) destiné à le fixer sur un bâti ou structure.

5. Matériau composite selon l'une quelconque des revendications 1 à 4, caractérisé en ce que le support (1 à 1''' ; 300) est fait d'une composition contenant un polyamide.

6. Matériau composite selon l'une quelconque des revendications 1 à 5, caractérisé en ce que la face de la première plaque (2 ; 50) orientée en direction de la seconde plaque (3 ; 52) du support (1 à 1''' ; 300) est parallèle à la face de la seconde plaque (3 ; 52) orientée en direction de la première plaque (2 ; 50), lesdites faces étant séparées l'une de l'autre d'une distance d'au plus 6 mm.

7. Matériau composite selon la revendication 1, caractérisé en ce que le support (1''') comprend une première plaque (50) comportant une ouverture (51), une seconde plaque (52) comportant une ouverture (53) et un élément (54) reliant lesdites plaques de manière à former un canal s'étendant entre lesdites ouvertures.

8. Matériau composite selon l'une quelconque des revendications 1 à 7, caractérisé en ce qu'il présente au moins un point ou ligne de pliage ou de faiblesse (61, 63 ; 303).

9. Matériau composite selon la revendication 1, caractérisé en ce que l'élément de support (300) comprend deux parties (301, 302) reliées ensemble par au moins une ligne de pliage (303), chaque partie (301, 302) supportant indépendamment de l'autre une plaque (304, 305), l'extrémité libre (306) d'une première plaque (304) étant distante de l'extrémité libre (307) de l'autre plaque (305) grâce à quoi un volume (7) est défini par lesdites parties et plaques, du matériau thermomoussant (8) étant placé dans le volume (7) grâce à quoi à la température de formation de mousse, une première partie (302) pivote autour de la ligne de pliage (303) par rapport à la seconde partie (301).

10. Matériau composite selon l'une quelconque des revendications précédentes, caractérisé en ce que le matériau thermomoussant (8 ; 60) est choisi parmi le groupe constitué de polymères et de copolymères dérivés de l'éthylène et d'un ester acrylique insaturé.

11. Joint expansé pouvant être obtenu grâce au chauffage d'un matériau composite selon l'une quelconque des revendications précédentes, dans lequel ledit joint comprend un support (1 à 1''' ; 300) comportant une première plaque (2 ; 50 ; 304, 305) et une seconde plaque (3 ; 52) reliées ensemble par des parois (4, 5 ; 16 ; 54 ; 308, 307) lesdites deux plaques définissant un volume ou rainure (7, 7a, 7b ; 58) et une mousse d'un matériau thermomoussant s'étendant dans ledit volume ou rainure de même qu'en partie à l'extérieur dudit volume ou rainure et étant expansé par une chaleur appliquée afin de venir en contact avec une paroi de la structure sur laquelle le joint doit être formé.

12. Joint selon la revendication 11, caractérisé en ce que la mousse s'étendant à l'extérieur du volume ou rainure présente pratiquement une masse volumique égale.

13. Joint selon la revendication 11, caractérisé en ce que le joint présente une ouverture centrale (51, 53) définie par le support (1''') qui est munie d'un volume ou rainure périphérique (58), la mousse s'étalant à l'extérieur du volume ou rainure afin de former un joint périphérique.

14. Procédé de fabrication d'un matériau composite selon l'une quelconque des revendications 1 à 11, dans lequel dans une première étape un matériau de matière plastique est injecté dans une chambre de moulage (71) d'un moule (70) de manière à former un support muni d'un volume ou rainure (7, 7a, 7b ; 58), et dans une étape ultérieure un matériau thermomoussant est injecté dans le volume ou rainure du support lorsque la paroi interne dudit volume ou rainure présente une température minimum de 50° C.

15. Procédé selon la revendication 14, dans lequel le matériau de matière plastique est injecté dans un moule muni d'un noyau, de préférence un noyau ne pouvant pas être déplacé, afin de former un volume ou rainure dans ledit support, le support étant ensuite enlevé dudit moule et placé dans un second moule, après quoi le matériau thermomoussant est injecté jusque dans ledit volume ou rainure.

16. Procédé selon la revendication 14, dans lequel le matériau de matière plastique est injecté dans un moule muni d'un noyau, le noyau étant ensuite enlevé afin de former un volume ou rainure dans lequel du matériau thermomoussant est injecté.
